# EUROPEAN PATENT SPECIFICATION

(11) **EP 1 559 542 B1**
(45) Date of publication and mention of the grant of the patent: **14.08.2019**
(21) Application number: 03810661.3
(22) Date of filing: 07.11.2003
(51) Int. Cl.: B32B 15/08

(54) **COMPOSITE OF ALUMINUM ALLOY AND RESIN COMPOSITION AND PROCESS FOR PRODUCING THE SAME**
VERBUNDARTIKEL AUS ALUMINIUMLEGIERUNG UND HARZZUSAMMENSETZUNG UND HERSTELLUNGSVERFAHREN DESSELBEN
COMPOSITE D'ALLIAGE D'ALUMINIUM ET DE COMPOSITION DE RESINE ET SON PROCEDE DE PRODUCTION

(30) Priority: 08.11.2002 JP 2002325245
(43) Date of publication of application: 03.08.2005
(73) Proprietor: TAISEI PLAS CO., LTD., Chuo-ku, Tokyo 103-0007 (JP)
(72) Inventor: NARITOMI, Masanori, TAISEI PLAS CO., LTD., Tokyo 103-0023 (JP); ANDO, Naoki, TAISEI PLAS CO., LTD., Tokyo 103-0023 (JP)
(74) Representative: Ter Meer Steinmeister & Partner
(86) International application number: PCT/JP2003/014214
(87) International publication number: WO 2004/041533

(56) References cited:
- JP-A- 4 131 215
- JP-A- 5 070 969
- JP-A- 6 039 876
- JP-A- 11 147 280
- JP-A- 50 158 539
- JP-A- 53 011 841
- JP-A- 58 217 679
- JP-A- 2001 225 352
- JP-A- 2002 120 002
- US-A1- 2002 045 042
- US-A1- 2002 075 686
- DATABASE WPI Week 197948 Thomson Scientific, London, GB; AN 1979-86714B XP002630679, & JP 54 135364 A (MATSUSHITA ELEC IND CO LTD) 20 October 1979 (1979-10-20)

## Description

### Technical Field:

The present invention relates to a composite of an aluminum alloy and a resin composition for use in housings of electronic devices, housings of home electrical devices, structural parts, mechanical parts, etc., and also relates to a production method therefor. More particularly, the present invention relates to a structure having a high-strength thermoplastic resin composition integrated with a shaped aluminum alloy material produced by various machining process. That is, the present invention relates to an aluminum alloy-and-resin composition composite for use in various electronic devices for mobile applications, home electrical products, medical devices, structural parts for vehicles, vehicle-mounted products, construction material parts, structural parts of other equipment, parts for exterior applications, and so forth, and also relates to a production method therefor.

### Background Art:

Document US 2002/0045042 A1 discloses a laminate that includes a metal layer which is formed on and covers a surface of an insulating substrate activated by a plasma treatment selected from a sputtering method, a vacuum depositing method and an ion plating method.

Moreover, document US 2002/0075686 A1 discloses a polyester resin composition and light-reflecting molded article thereof.

JP 54 135364 A discloses a printed circuit board obtained by forming on the surface of a conductive metal film a resin substrate of a resin elastomer by injection molding.

Techniques for firmly integrating a metal and a resin with each other are demanded in a wide variety of fields such as those of manufacturing parts of automobiles, home electrical products, industrial equipment, etc. For
this purpose, many adhesives have been developed. Among the proposed adhesives include very excellent ones. Adhesives that exhibit their function at ordinary temperature or upon heating are used for bonding to integrate a metal and a synthetic resin with each other. The method using such an adhesive is now a common technique.

However, the present inventors presumed that there is an even more rational bonding method, regardless of whether or not an adhesive is used, and conducted exhaustive studies and development to find such a bonding method. Our object was to integrate a high-strength engineering resin with metals, such as magnesium, aluminum, alloys of these metals, stainless steel and other iron alloys, so firmly that the resulting integrated article would permanently maintain the strength at a practical level. In the present state of the art, bonding a metal and a shaped resin material together by using an adhesive is a processing step that is commonly carried out in the industrial fields of home electrical devices, machinery, everyday items, and so forth. However, consideration is not given much to the matching of linear expansion coefficient between the metal and the resin when selecting constituent materials therefor.

In the actual circumstances, elasticity is imparted to the adhesive so that the adhesive layer serves to relax internal strains due to a linear expansion coefficient difference between the metal and resin materials, thereby maintaining the bonded condition. This is a kind of deception in the sense that the distortional stress remains in the adhesive layer. Thus, the conventional technique is not 100 percent satisfactory in view of the fundamental idea of integrating together the metal and the resin permanently. The reason why no particular question has been raised about this situation is deemed as follows.

That is, adhesives are developed in the technical field of adhesives. Their goal is to develop universal and durable adhesives. Therefore, we infer that developers in the technical field of adhesives usually do not consider to develop a metal treating method by conceiving a fine structure of the metal surface that is suitable for bonding, or to improve the resin composition to thereby form a product having a coefficient of linear expansion equal to that of the metal.

It is inferred that adhesive developers deem that the above-described development and design belong to the fields of metal working and resin manufactures, or they consider that their mission is to diligently develop elastic adhesives, in which they specialize, although it is technically difficult to develop such adhesives. In short, fundamental examination of constituent materials of both the metal and the resin composition to be bonded to each other has not heretofore been made among persons skilled in these technical fields.

Meanwhile, the present inventors conducted exhaustive studies and development and found that bond strength increases uniquely if a shaped aluminum material is dipped in an aqueous solution of at least one selected from the group consisting of ammonia, hydrazine, and a water-soluble amine compound and thereafter brought into contact with a thermoplastic resin composition containing polybutylene terephthalate (hereinafter referred to as "PBT") as a main component under ordinary injection molding temperature and pressure conditions (we proposed this finding as WO 03/064150 A1).

It has also heretofore been known that a metal-and-resin composite product is formed by insert-molding a metal product [for example, see Japanese Patent Application Unexamined Publication (KOKAI) Nos. 2001-225352, Sho 54-13588, Sho 54-13587, Sho 58-217679, Sho 50-158539, and Hei 5-70969]. However, these conventional composite producing methods are for producing electric contacts, aluminum foil, etc., and hence cannot provide firm bonding adequate for mechanical structures that are required to exhibit strong bond strength (adhesion) and rigidity.

The present inventors further carried out exhaustive researches and development from the viewpoint of finding substances suitable for use as a metal material and a resin material. In this regard, however, both metal and resin materials should not be very special in order to be usable in practical application. In order for a thermoplastic resin composition to bond to a metal permanently, the linear expansion coefficient thereof needs to be matched to that of the metal.

The present inventors selected as a resin composition a polybutylene terephthalate resin (hereinafter referred to as "PBT") exhibiting satisfactory heat resistance and strength and having low hygroscopicity and moderate chemical resistance. The linear expansion coefficients of thermoplastic resins are much higher than those of metals. PBT has a linear expansion coefficient of 8 to 10 × 10⁻⁵°C⁻¹, which is much higher than those of metals, which are about 1.0 to 2.5 × 10⁻⁵°C⁻¹. Among metals, aluminum is one of those having the highest linear expansion coefficients. The linear expansion coefficient of an aluminum alloy containing pure aluminum is 2.2 to 2.5 × 10⁻⁵°C⁻¹. Therefore, we selected as a metal an aluminum alloy that has a high coefficient of linear expansion and hence allows the numeral range thereof to be easily matched to that of the resin composition and that enables various physical properties to be obtained by alloying.

First, PBT was compounded with a large amount of fibrous filler, etc., and another polymer was added thereto to form a thermoplastic resin composition. In this way, we attempted to make the linear expansion coefficient of the thermoplastic resin composition coincident with that of the aluminum alloy. We prepared various compounds and formed rectangular molded articles by injection molding. Coefficients of linear expansion in the lengthwise direction (direction of the resin flow during molding) and in the crosswise direction were measured to prepare a large number of pieces of data. By analyzing the data, we found a thermoplastic resin composition having a linear expansion coefficient approximately equal to that of the aluminum alloy.

Regarding aluminum alloys, a surface treatment method preferable for bonding of them has been developed from old times. We examined usability of this surface treatment method. Aluminum alloys containing copper that are standardized as "2000 series" by Japanese Industrial Standards (JIS), also known as "duralumin", are mostly used for aircraft. For the "2000 series" aluminum alloys, treatment methods for obtaining long-term stability in severe service environments have been developed, although these are concerned with the bonding of one aluminum alloy to another. For example, the EPL etching method shown in D2651 of ASTM (American Society of Testing and Materials) is a process in which duralumin is washed with an alkaline aqueous solution and thereafter dipped in concentrated sulfuric acid containing chromium, followed by washing with ion-exchange water.

The duralumin treated by this method is covered at the surface thereof with fine recesses having a diameter of about 0.04 µm and with small whisker projections extending vertically from the openings of the fine recesses. The thickness of the thinnest film portion of the aluminum oxide layer covering the metallic aluminum is said to be about 5 nm. The treated duralumin strengthens the interlocking with the adhesive by the surface where recesses and projections coexist with each other. ASTM D3933 shows a method wherein an aluminum alloy is anodized in an aqueous phosphoric acid solution. On the surface of the aluminum alloy treated by this method also, deep pores (depth of 0.1 to 0.3 µm) having a diameter of 0.04 µm and short whiskers extending vertically from the openings of the pores are observed.

The thickness of the thinnest film portion of the aluminum oxide layer covering the metallic aluminum is considered to be several nanometers. It should be noted, however, that these methods may be said to be special methods for manufacturing structural materials for aircraft. Because they use a large amount of ion-exchange water, the treatment methods are difficult to adopt for use in ordinary liquid treatment lines, i.e. plating equipment, aluminum anodizing equipment, equipment for caustic treatment of magnesium alloy, etc.

Meanwhile, the document of Int. J, Adhes. 5(1), 40-42 (1985), D. J. Arrowsmith and A. W. Clifford states that an aluminum alloy having high durability and good adhesion can be obtained simply by dip-etching in an aqueous solution of at least 15% caustic soda, for several minutes, followed by thorough rinsing with water. This report does not assume that the treated aluminum alloy will be used for aircraft. The treatment is deemed to be effective in its own way in terms of adhesion because recesses and projections are formed on the surface to some extent by the method. However, as compared, at least, with the complicated methods described above, it is inferred that the surface area is small and the anchor effect (bonding effect) is low even if the treated surface has a certain degree of roughness.

On the other hand, the thinnest film portion of the aluminum oxide layer covering the metallic aluminum part also must be thin. However, this gives rise to no practical problem because long-term stability is needed regardless of whether the aluminum alloy is used for aircraft or not. In short, there is the question as to the extent to which the surface area of the aluminum alloy needs to be increased in order to obtain the required anchor effect. For example, there is the view that an excessively finely-etched surface may prevent the resin or the adhesive from sufficiently entering (filling) the pores and recesses formed on the treated surface, resulting in the finely etching process being practically worthless.

Regarding the thickness of the aluminum oxide layer, we are interested in the thickness of the thinnest film portion that is required to ensure satisfactory durability, and also interested in whether or not durability is actually determined only by the thickness of the thinnest film portion. Therefore, the present inventors first carried out aluminum alloy treatment by the above-described simple caustic soda dipping method (hereinafter referred to as "treatment ①") using the aluminum A5052 alloy (JIS), which is considered to be used for the largest number of applications. Next, we performed various bonding tests by using an aluminum alloy having been subjected to aluminum anodizing treatment to a halfway point in the process (hereinafter referred to as "treatment ②"), assuming a method close to those specified in ASTM D2651 and D3933.

Incidentally, the aluminum anodizing treatment is usually carried out in the following sequence: degreasing of the aluminum alloy; alkali etching; polishing (acid etching); anodizing; dyeing; and sealing. The aluminum surface immediately after the anodizing process has the largest surface area. The anodized aluminum surface is closely crowded with cylindrical crystals of aluminum oxide having pores with a diameter of 0.05 to 0.08 µm and a depth reaching several to 20 µm. Thus, the cylindrical crystals form a surface that is crowded with an infinite number of openings.

The pore diameter of the aluminum oxide is slightly larger and the pore length is much longer than in the case of duralumin treated by ASTM D3933. The thickness of the aluminum oxide at the pore bottom, that is, the thickness of the thinnest film portion of the aluminum oxide layer covering the metallic aluminum seems to be about 1 nm or more. However, the precise thickness of the thinnest film portion is not clear.

The present inventors performed various experiments by using test pieces of an aluminum alloy treated by two different processes, i.e. treatment ① and treatment (2), and also using a PBT resin having a coefficient of linear expansion adjusted to the same level as that of the aluminum alloy. We expected that if the aluminum alloy and the resin were integrated together whichever method we used, interesting features would appear in the strength of the integrated article. Speaking plainly, the results were as follows. With the treatment ①, satisfactory strength could not obtained for some integrated articles. Therefore, we found it necessary to further scheme to solve the problem. With the treatment ②, bonding using an adhesive showed excellent results. With other pore forming methods, however, results were worse than those with the treatment ①, which is a simple and easy method. Thus, we found it impossible to predict results only with the size of the surface area. Therefore, the present inventors decided to assume a favorable aluminum alloy surface configuration and to establish an aluminum surface configuration that allows a resin composition and an aluminum alloy to be integrated together excellently.

With the above-described technical background, the present invention was made to attain the following objects.

An object of the present invention is to obtain an aluminum alloy-and-resin composite wherein a thermoplastic resin composition and a shaped aluminum alloy material are made to adhere to each other so strongly that they will not readily separate from each other by treating the aluminum alloy surface, and also obtain a production method therefor.

Another object of the present invention is to obtain an aluminum alloy-and-resin composite capable of making housings and parts of various devices, structures, etc. free from problems in terms of configuration, structure and mechanical strength, and also obtain a production method therefor.

Still another object of the present invention is to obtain an aluminum alloy-and-resin composite useful for reducing the weight of housings and parts of electronic devices, structures, etc. and for simplifying device manufacturing processes, and also obtain a production method therefor.

### Disclosure of the Invention:

An aluminum alloy-and-resin composition composite according to a first feature of the present invention comprises a shaped aluminum alloy material having a surface with a surface roughness of 5 µm to 50 µm and having fine recesses or projections of not larger than 1 µm on the surface. The aluminum alloy-and-resin composition composite further comprises a thermoplastic resin composition fixed to the surface of the shaped aluminum alloy material by entering the recesses or engaging the projections. The thermoplastic resin composition contains as a main component a polybutylene terephthalate resin or polyphenylene sulfide having an average coefficient of lengthwise and crosswise linear expansion of 2 to 4 × 10^{-5o}C⁻¹.

An aluminum alloy-and-resin composition composite according to a second feature of the present invention comprises a shaped aluminum alloy material having a surface with a surface roughness of 1 µm to 10 µm and having fine recesses or projections of 0.01 µm to 0.1 µm in diameter on the surface. The surface of the shaped aluminum alloy material is covered with a + trivalent aluminum compound having an average thickness of about 0.001 µm. The aluminum alloy-and-resin composition composite further comprises a thermoplastic resin composition fixed to the surface of the shaped aluminum alloy material by entering the recesses or engaging the projections. The thermoplastic resin composition contains as a main component a polybutylene terephthalate resin or polyphenylene sulfide having an average coefficient of lengthwise and crosswise linear expansion of 2 to 4 × 10⁻⁵°C⁻¹.

An aluminum alloy-and-resin composition composite according to a third feature of the present invention is characterized as follows. In the aluminum alloy-and-resin composition composite according to the first or second feature of the present invention, the recesses or the projections include first recesses or first projections having a first diameter of 0.03 µm to 0.1 µm and a depth about equal to or larger than the first diameter. The number of first recesses or first projections per 1 µm square area of the surface is not less than 10. The recesses or the projections further include second recesses or second projections having a second diameter of 0.01 µm to 0.03 µm and a depth about equal to or larger than the second diameter. The number of second recesses or second projections per 1 µm square area of the surface is not less than 50.

An aluminum alloy-and-resin composition composite according to a fourth feature of the present invention is characterized as follows. In the aluminum alloy-and-resin composition composite according to one feature selected from the first to third features of the present invention, the thermoplastic resin composition is fixed to the surface of the shaped aluminum alloy material by bonding using an adhesive.

An aluminum alloy-and-resin composition composite according to a fifth feature of the present invention is characterized as follows. In the aluminum alloy-and-resin composition composite according to one feature selected from the first to third features of the present invention, the thermoplastic resin composition is fixed to the surface of the shaped aluminum alloy material by injection molding, heat pressing, or co-extrusion.

According to a sixth feature thereof, the present invention provides a production method for the aluminum alloy-and-resin composition composite according to one feature selected from the first to third features of the present invention. The production method is characterized as follows.

A coated shaped aluminum alloy material having a thin polyalkylene terephthalate film or polyphenylene sulfide adhering to a surface thereof is produced from the above-described shaped aluminum alloy material and an organic solvent solution of a polyalkylene terephthalate resin or polyphenylene sulfide. The coated shaped aluminum alloy material is inserted into an injection mold. Then, the above-described polyalkylene terephthalate resin or polyphenylene sulfide is injected into the injection mold.

According to a seventh feature thereof, the present invention provides a production method for the aluminum alloy-and-resin composition composite according to one feature selected from the first to third features of the present invention. The production method is characterized as follows.

The above-described shaped aluminum alloy material is coated with a urethane curable or epoxy curable paint or ink. After the paint or ink has been hardened, the coated shaped aluminum alloy material is inserted into an injection mold. Then, the above-described polyalkylene terephthalate resin or polyphenylene sulfide is injected into the injection mold.

According to an eighth feature thereof, the present invention provides a production method for the aluminum alloy-and-resin composition composite according to one feature selected from the first to third features of the present invention. The production method is characterized as follows.

The above-described shaped aluminum alloy material is heated to not lower than 200°C, and the above-described polyalkylene terephthalate resin or polyphenylene sulfide is melted and brought into contact with the shaped aluminum alloy material under pressure.

According to a ninth feature thereof, the present invention provides a production method for the aluminum alloy-and-resin composition composite according to one feature selected from the first to third features of the present invention. The production method is characterized as follows.

The above-described shaped aluminum alloy material is dipped in an aqueous solution of at least one selected from the group consisting of hydrazine, ammonia, and an amine compound. The dipped shaped aluminum alloy material is inserted into an injection mold. Then, the above-described polyalkylene terephthalate resin or polyphenylene sulfide is injected into the injection mold.

The composite of an aluminum alloy and a resin composition and the production method therefor according to the present invention will be described below in detail for each of the above-described elements.

### [Shaped Aluminum Alloy Material]

As the aluminum alloy, it is possible to use various aluminum alloys such as those standardized as "1000 series" to "7000 series" by JIS (Japanese Industrial Standards) and those of die-casting grade. First, the aluminum alloy is formed by various machining process into a configuration necessary for use as an insert in injection molding process to prepare a shaped aluminum alloy material as one of a pair of materials to be bonded together ("fixing" is occasionally used as a synonym for "bonding" in the present invention,). The shaped metal material processed into a necessary configuration and structure requires that the surface thereof that is to be bonded should not be oxidized thick and should be free from oil matter or an oxide of oil matter that may be attached to the surface during machining. When it is clear that rust is present on the surface of the shaped aluminum alloy material as a result of it having been allowed to stand for a long period of time, the rust needs to be removed by polishing or the like. It is also preferable to carry out dry or wet blasting immediately before the process described below. The dry or wet blasting process may serve also as polishing.

### [Pretreatment Process: Cleaning and Etching]

The shaped metal material is subjected to degreasing and cleaning to remove machining oil or other contamination from the surface thereof. For degreasing, commercially available metal degreasing agents are usable, and it is particularly preferable to use them when mass-production is made. As a simple and easy method, the shaped aluminum alloy material should preferably be dipped in a water-soluble organic solvent, e.g. acetone, ethanol, or isopropyl alcohol. To perform cleaning even more thoroughly, the shaped aluminum alloy material should preferably be dip-treated, as stated above, under application of ultrasonic waves. In either case, the shaped aluminum alloy material is rinsed with water after the degreasing process.

After these processes, the shaped aluminum alloy material is dipped in a 1 to 10% aqueous caustic soda solution for from several tens of seconds to several minutes, followed by rinsing with water. In the present invention, this process is referred to as "alkali etching". By this process, the aluminum oxide and aluminum hydroxide layer covering the aluminum alloy surface is dissolved. Further, the inside metallic aluminum also dissolves while releasing hydrogen. As a result, the aluminum alloy surface is roughened to a surface roughness of 5 to 50 µm even if it is flat before the treatment.

The surface layer becomes a thin oxidized aluminum layer. It is stated in a document that + trivalent aluminum atoms form AIO(OH) as a main structure. At this stage, even if the aluminum surface is analyzed at a deepened angle by X-ray photoelectron spectroscopy (XPS), only a few metallic aluminum atoms can be detected. XPS is said to be capable of analyzing the aluminum alloy to a depth of about 1 nm from the surface thereof. Therefore, the thickness of the aluminum oxide film is considered to be 1 to 2 nm. Incidentally, in the XPS analysis of aluminum alloys not subjected to alkali etching, that is, aluminum alloys (A5052 and A1100) subjected to only degreasing and rinsing, zero-valent aluminum can be clearly detected with a sensitivity of about 1/2 to 1/3 of that for + trivalent aluminum. Therefore, it can be presumed that the ordinary aluminum alloys are covered with an aluminum oxide film of about 0.5 to 1.0 nm in thickness. In short, the oxide film thickness can be surely increased only by etching with caustic soda.

### [Fine Etching]

The alkali etching as pretreatment process enables large recesses or projections to be formed on the aluminum surface and allows the thickness of the aluminum oxide film on the surface to be increased. The purpose of this process is to form even finer recesses or projections on the aluminum surface. Experiments performed by the present inventors revealed that the hydroxide ion concentration is important. The object of this process was almost attained by dipping the aluminum alloy in an aqueous solution of at least one of caustic soda, soda aluminate, soda pyrophosphate, ammonia, hydrazine, and methylamine, which had been adjusted to pH 10.0 to 11.5.

For example, several hundred cc of an aqueous ammonia solution containing an ammonia concentration of several percent and several hundred cc of an aqueous caustic soda solution diluted to a caustic soda concentration of not more than 1% are prepared. A pH meter is put into the aqueous ammonia solution. While the aqueous ammonia solution is being stirred, the aqueous caustic soda solution is dropped into the aqueous ammonia solution to adjust the pH in the neighborhood of 11.0. The aluminum alloy having completed the pretreatment process is dipped in the aqueous solution for from several minutes to several tens of minutes, followed by rinsing with water.

The dipping in the low base concentration aqueous solution causes the aluminum to dissolve while releasing hydrogen, although the rate of etching is low. As a result, fine recesses having a very small diameter are formed. Repeating the aluminum alloy treatment causes the pH to lower. Therefore, caustic soda may be added so that the pH is kept in the range of 10.0 to 11.5. Temperature and time are also important factors. Dipping at a higher temperature for a longer period of time causes the recess diameter to be undesirably increased as in the case of the foregoing alkali etching.

Dipping for several minutes at a temperature in the neighborhood of room temperature is preferable. Such a dipping process produces fine recesses of about 0.01 to 0.1 µm in diameter. The density of such recesses is as follows. The number of recesses having a diameter of 0.01 to 0.03 µm per 1 µm square area of the surface is from 50 to 500. The number of recesses having a diameter of 0.03 to 0.1 µm per 1 µm square area of the surface is from 10 to 50. When the aluminum alloy surface is analyzed by XPS, only a very small quantity of zero-valent aluminum can be detected. Most of the detected aluminum is + trivalent aluminum. This fact shows that the aluminum alloy surface is covered with a + trivalent aluminum compound having a thickness of about 1 nm (0.001 µm), if we must say, from 1 to 2 nm.

### [Thermoplastic Resin Composition]

The following is a description of the thermoplastic resin composition that is used in the present invention. It is preferable to use a thermoplastic resin composition containing PBT or polyphenylene sulfide (PPS) as a main component. Further, it is necessary to match the coefficient of linear expansion of the thermoplastic resin composition to that of the aluminum alloy. Therefore, it is important for the thermoplastic resin composition to contain a filler. First, it is necessary to use a fibrous filler, for example, glass fiber, carbon fiber, aramid fiber, and other high-strength fibers similar to these. However, if a fibrous filler is added singly, strong directionality appears during injection molding, which is unfavorable depending upon the configuration. Therefore, it is preferable to use a thermoplastic resin composition containing a fibrous filler and a powder filler such as calcium carbonate, magnesium carbonate, silica, talc, clay, glass, ground carbon fiber, ground aramid fiber, and other resin-filling inorganic fillers similar to them.

Further, injection molding is frequently used to obtain the desired composite from the viewpoint of productivity, cost, etc. In this case, the mold shrinkage factor is also important. In conclusion, it is preferable that the mold shrinkage factor should be small. There is a method for minimizing the mold shrinkage factor, in which PBT or PPS is made to contain an amorphous polymer, instead of using a thermoplastic resin composition consisting singly of PBT or PPS, which originally have a large mold shrinkage factor. More specifically, the thermoplastic resin composition may contain a polycarbonate resin (hereinafter referred to as "PC"), an ABS resin (hereinafter referred to as "ABS"), a polyethylene terephthalate resin (hereinafter referred to as "PET"), or a polystyrene resin (hereinafter referred to as "PS").

The coefficient of linear expansion of the aluminum alloy is 2.2 to 2.5 × 10⁻⁵°C⁻¹. Therefore, if the average coefficient of lengthwise and crosswise linear expansion of the thermoplastic resin composition is 2 to 3 × 10⁻⁵°C⁻¹, the thermoplastic resin composition and the aluminum alloy are approximately coincident with each other in terms of the coefficient of linear expansion. Even an average coefficient of lengthwise and crosswise linear expansion of 2 to 4 × 10⁻⁵°C⁻¹ is considered to be practically appropriate. In addition, the thermoplastic resin composition should preferably have a mold shrinkage factor in the range of from 0.4 to 0.5%. It should be noted that the average coefficient of lengthwise and crosswise linear expansion is used for the thermoplastic resin composition for the following reason. The coefficient of linear expansion is small in a direction in which the fibers of the resin composition mainly lie side-by-side with each other, but large in a direction perpendicular to the above-mentioned direction. Therefore, the average of the coefficients of linear expansion in the two directions is used as an indication of the linear expansion coefficient of the resin composition.

### [Integration of Aluminum Alloy and Resin Composition]

The most rational integrating process is as follows. An insert molding mold is prepared, and the aluminum alloy is inserted into the injection mold. Then, the thermoplastic resin composition is injected into the mold. It is preferable that when the molded article is removed from the mold, the aluminum alloy and the thermoplastic resin composition should have already been bonded together into an integrated structure. However, in the ordinary injection molding, the injection mold has been adjusted to a temperature at which the resin is cooled to become solidified, and the inserted metal piece is also at a temperature equal to or lower than the mold temperature. Therefore, the molten resin composition injected into the mold undesirably becomes solidified before entering the fine recesses formed on the aluminum alloy surface.

The following is common general technical knowledge to a person skilled in the technical field of injection molding. That is, it is not easy for the molten resin to enter pores of 5 µm or less in diameter open in the injection mold. It is almost impossible to make the molten resin enter, at least, pores of 1 µm or less in diameter. Accordingly, it is impossible from the beginning to attain the desired integration at once by the ordinary insert molding. We confirmed the effectiveness of the present invention by several conceivable methods. One of them is the commonest method of bonding using an adhesive. That is, an aluminum alloy and a resin molded material are prepared so that their surfaces to be bonded are completely coincident with each other. For example, the two surfaces are formed into flat surfaces and bonded together with a solvent-free two-part adhesive, if possible.

The second is a method in which a metal material is previously covered with a resin film having an affinity for PBT. This is inserted into an insert mold, and a resin composition is injected into the mold so as to bond to the metal material. For example, PBT dissolves in *o-*chlorophenol. Therefore, an organic solvent solution of PBT is prepared and put in a hermetically sealable container. The above-described aluminum alloy is dipped in the solution. In this state, the pressure is reduced and raised repeatedly at short intervals, thereby allowing the solution to penetrate into the aluminum alloy surface thoroughly. Thereafter, the aluminum alloy is taken out of the solution and dried by blowing nitrogen thereonto. With this process, an aluminum alloy coated with a thin PBT film can be produced.

The following is a method invented by the present inventors, on which we have applied for a patent separately from the present application. That is, a paint or an ink is applied to a metal and hardened, and a PBT resin is injected onto the coated metal, thereby bonding them to each other. The main component of the paint or ink, exclusive of the solvent used therein, may be a urethane curable, epoxy curable or modified alkyd curable material. For example, a two-part ink consisting essentially of a polyalcohol and a polyisocyanate, which is a urethane curable ink, is printed on the above-described aluminum alloy and cured under curing conditions specified by the manufacturer of this ink.

By this curing process, about 50% of the curable component of the ink is cured. However, the rest of the curable component remains unreacted. The ink takes several months or years to be cured completely. Probably, the uncured component reacts with the PBT resin when injected at a temperature not lower than the melting temperature thereof. As a result, the PBT resin and the print layer bond to each other. In actuality, the bond strength varies to a considerable extent depending upon the kind of metal used. Therefore, it is necessary to select a suitable paint or ink by trial and error. There is a case where the adhesion between the paint or ink and the metal is weak. In such a case, an appropriate primer may be needed.

The most direct method may be as follows. An aluminum alloy to be bonded by injection process is previously heated to a temperature close to the melting temperature of a PBT resin to be bonded. Then, the PBT resin is injected onto the heated aluminum alloy. This method needs to cool the whole below the solidification temperature of the resin after the injection process and is therefore regarded as difficult to use from the industrial point of view. However, the method is simple in theory.

The following is a method discovered by the present inventors. At the time of finely etching an aluminum alloy, it is dipped in an aqueous solution of at least one selected from the group consisting of hydrazine, ammonia, and a water-soluble amine compound, thereby treating the aluminum alloy so that it has a surface condition as defined in the present invention. After the dipping treatment, the aluminum alloy is rinsed with water and dried with air at a high temperature. Then, the aluminum alloy is inserted into an insert mold, and a PBT resin is injected into the mold. By doing so, injection bonding can be effected at the ordinary mold temperature. This method can ensure mass productivity, although it has not yet completely been clarified why the molten resin enters the fine recesses while remaining unsolidified (see WO 03/064150 A1).

### Brief Description of the Drawings:

Fig. 1 is a photograph of a surface-treated aluminum alloy surface.
Fig. 2 shows the conditions of recesses observed from the photograph of Fig. 1 and the measured diameters of the recesses.
Fig. 3 shows a plate-shaped resin molded article.
Fig. 4 shows a test piece prepared by bonding the plate-shaped molded article and an aluminum alloy piece.
Fig. 5 is a sectional view of an injection mold for molding a test piece.
Fig. 6 shows a test piece molded by the injection molding apparatus shown in Fig. 5.
Fig. 7 is a sectional view of an injection mold having a heating device.
Fig. 8 shows a test piece molded by the injection mold shown in Fig. 7.
Fig. 9 is a scanning electron microscope photograph of a section of a bonded portion where an aluminum and a PBT resin are bonded to each other.
Fig. 10 is a scanning electron microscope photograph of the PBT resin removed from the section of the bonded portion shown in Fig. 9.

### Best Mode for Carrying Out the Invention:

Examples of the present invention will be described below in detail by way of experimental examples.

### [Experimental Example 1]

A commercially available aluminum alloy plate A5052/H38 with a thickness of 1 mm was purchased. The aluminum alloy plate was cut into a rectangular piece of 100 mm by 25 mm. The aluminum alloy piece was dipped in 1 liter of ethanol for 10 minutes under application of ultrasonic waves, and then dipped in 4 liters of tap water under stirring. Thereafter, the aluminum alloy piece was put into a plastic basket and washed with running tap water. Next, the aluminum alloy piece was dipped in a 2% aqueous caustic soda solution for 2 minutes, followed by rinsing with ion-exchange water. Then, the aluminum alloy piece was dipped in a 1% aqueous hydrochloric acid solution for 1 minute to effect neutralization. Then, the aluminum alloy piece was dip-washed in 4 liters of ion-exchange water, followed by rinsing with running ion-exchange water.

One liter of a 2% aqueous ammonia solution was prepared. A 1% aqueous caustic soda solution prepared separately was dropped into the aqueous ammonia solution under stirring to adjust the pH to 11.0 at 50°C. The aluminum alloy treated as stated above was dipped in the aqueous solution for 2 minutes and then thoroughly washed with ion-exchange water. The aluminum alloy was dried with hot air at 60°C for 20 minutes and then stored in dry air.

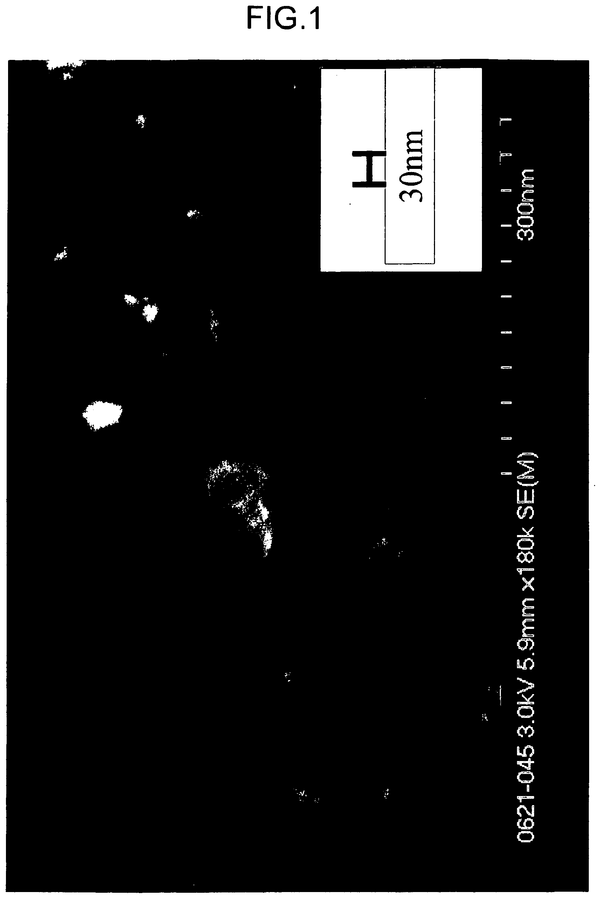

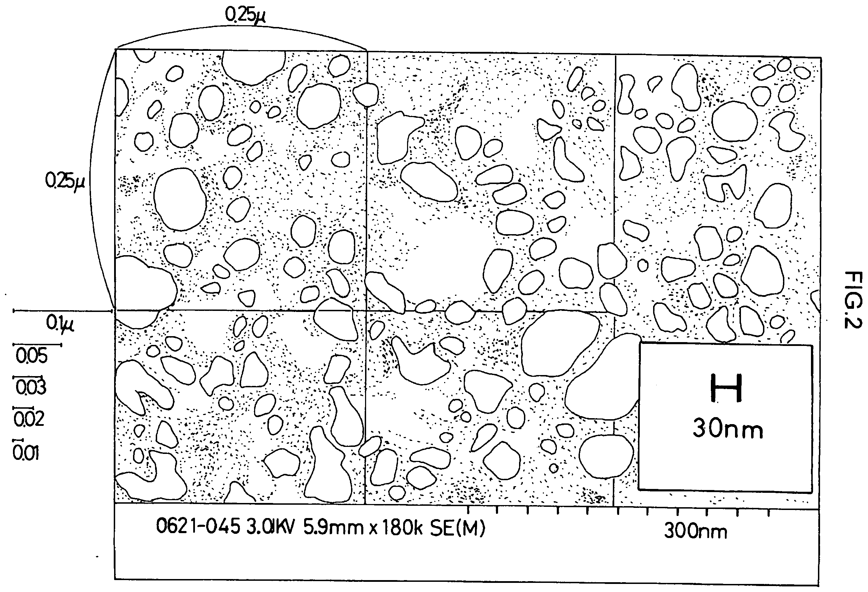

The aluminum alloy surface was observed by using a scanning electron microscope (SEM) "S-4700 (available from Hitachi, Ltd.)". A photograph of the aluminum alloy surface is shown in Fig. 1. Fig. 2 shows the conditions of recesses on the aluminum alloy surface observed from the photograph of Fig. 1 and also shows the diameters of the recesses measured by drawing lines along the contours of the recesses. It was observed that there were 3 recesses of 0.03 to 0.1 µm in diameter and 15 to 20 recesses of 0.01 to 0.03 µm in diameter per 0.25 µm square area of the surface on the average. The densities of such recesses were substantially the same at different positions of observation.

The aluminum alloy surface was observed by using XPS (X-ray Photoelectron Spectroscopy). Only a slight amount of zero-valent aluminum element was detected even when the aluminum alloy was observed at a deepened angle. Most of the detected aluminum was + trivalent aluminum. XPS is said to be capable of analyzing the aluminum alloy to a depth of about 1 nm from the surface thereof. Therefore, the thickness of the aluminum oxide film was considered to be 1 to 2 nm.

### [Experimental Example 2]

A thermoplastic resin composition was prepared by a twin-screw extruder and a pelletizer. The thermoplastic resin composition consisted essentially of 60% a polymer alloy containing 80% PBT and 20% PET, 20% glass fiber, and 20% glass powder filler. A rectangular molded article of 100 mm by 25 mm having a thickness of 3 mm was obtained by injection molding from a rectangular end. The coefficients of linear expansion in the lengthwise and crosswise directions were measured in the temperature range of from 0°C to 60°C. The average coefficient of linear expansion in the lengthwise direction was 2.1 to 2.3 × 10⁻⁵°C⁻¹. The average coefficient of linear expansion in the crosswise direction was 3.7 to 3.9 × 10⁻⁵°C⁻¹. The average of the coefficients of linear expansion in the lengthwise and crosswise directions was 3.0 × 10⁻⁵°C⁻¹.

### [Experimental Example 3]

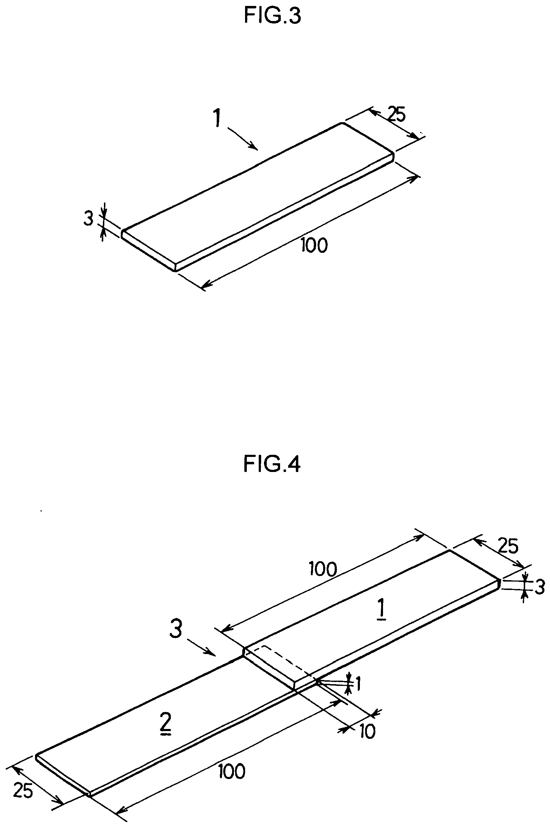

Injection molding was carried out by using as a raw material the thermoplastic resin composition pellets prepared in Experimental Example 2, thereby obtaining a plate-shaped resin molded article 1 as shown in Fig. 3. As shown in Fig. 4, the resin molded article 1 and an aluminum alloy piece 2 were bonded together with an adhesive to obtain a test piece 3. Prior to the bonding process, a portion of the resin molded article 1 to be bonded was polished on a flat iron plate with calcium carbonate of 25 µm in average diameter and a small amount of water.

The resin molded article 1 was further polished with calcium carbonate of 5 µm in average diameter and a small amount of water and thoroughly washed with tap water under application of ultrasonic waves. After being placed in an air blast dryer at 50°C for 6 hours, the resin molded article 1 was stored in a desiccator for drying filled with concentrated sulfuric acid. The aluminum alloy piece 2 obtained in Experimental Example 1 was also stored in a desiccator for drying. The resin molded article 1 and the aluminum alloy piece 2 were stored in the respective desiccators for 1 week.

A two-part epoxy adhesive "Cemedine 1500 (registered trademark: available from Cemedine Co., Ltd.) was prepared as specified by the manufacturer. The adhesive was applied to the aluminum alloy, and the plate-shaped resin molded article was pressed against the adhesive-coated side of the aluminum alloy to bond them into an integrated article. Further, a weight of 15 kg was placed on the integrated article. This was allowed to stand for 2 days. Then, the weight was removed, and the integrated article was allowed to stand for 1 week. Thereafter, both ends of the integrated article were set to a tensile testing machine to measure the tensile shear breaking strength. The average of 10 measured values of the shear breaking strength of the bonded surface was 10.0 MPa (102 kgf per square centimeter).

### [Reference Example 1]

A polished plate-shaped molded article made of a resin composition was obtained in the same way as in Experimental Example 2 and stored in a desiccator for drying. Meanwhile, an aluminum alloy plate A5052/H38 with a thickness of 1 mm was cut into a rectangular piece of 100 mm by 25 mm. After being degreased and rinsed with water in the same way as in Experimental Example 1, the aluminum alloy piece was dipped in a 20% aqueous caustic soda solution for 3 minutes and then thoroughly washed with ion-exchange water. Thereafter, the aluminum alloy piece was dried with an air blast at 50°C for 6 hours and then stored in a desiccator for drying. The polished resin molded article and the aluminum alloy piece were stored in the respective desiccators for drying for 1 week.

One aluminum alloy piece was taken out from the desiccator to measure the surface roughness thereof. Subsequently, the surface condition was analyzed by SEM and XPS. Regarding the surface roughness, 15 µm was observed for a length of 2 mm. The SEM observation revealed that there were a few irregularities that were regarded as pores or recesses having a diameter of not more than 0.1 µm, and there were many places where forming lines present on the aluminum alloy surface from the beginning (i.e. fine scratch lines cut on the aluminum alloy surface by a roll during manufacture of the aluminum plate) melted away, resulting in large gentle recesses or projections.

In the XPS observation, only a slight amount of zero-valent aluminum element was detected even when the aluminum alloy was observed at a deepened angle. Most of the detected aluminum was + trivalent aluminum. The magnitude of the detection peak of zero-valent aluminum was equal to or slightly larger than that in Experimental Example 1. XPS is said to be capable of analyzing the aluminum alloy to a depth of about 1 nm from the surface thereof. Therefore, the thickness of the aluminum oxide film was also considered to be about 1 nm.

This process may be summarized in comparison to Experimental Example 1 as follows: ① the surface roughness is similarly large; ② the surface area is small; and ③ the thickness of the oxide film is equal to or slightly smaller than that in Experimental Example 1. The remaining aluminum alloy pieces were taken out from the desiccator and bonded to resin molded articles, respectively, with an adhesive to form integrated articles in the same way as in Experimental Example 3. After a while, tensile testing was performed on the integrated articles. Ten integrated articles were tested. The average of 10 measured values of the shear breaking strength of the bonded surface was 7.6 MPa (78 kgf per square centimeter). This was lower than the value in Experimental Example 3.

### [Reference Example 2]

A polished plate-shaped molded article made of a resin composition was obtained in the same way as in Experimental Example 3 and stored in a desiccator for drying. Meanwhile, an aluminum alloy plate A5052/H38 with a thickness of 1 mm was cut into a rectangular piece of 100 mm by 25 mm and subjected to an aluminum anodizing process. That is, the aluminum alloy piece was dipped in a 20% aqueous solution of a commercially available aluminum degreasing material for 10 minutes, following by rinsing with water. Subsequently, the aluminum alloy piece was dipped in a 20% aqueous caustic soda solution at 90°C for 20 seconds, followed by rinsing with water. Then, the aluminum alloy piece was dipped in a mixed acid liquid of sulfuric acid and phosphoric acid at 100°C for 2 minutes, followed by rinsing with water.

Subsequently, an electrode was bonded to an end of the aluminum alloy, and anodizing was performed for 20 minutes under application of a voltage of 15 v in a 40% aqueous sulfuric acid solution kept at 20°C, followed by rinsing with running ion-exchange water. The anodized aluminum alloy piece was dried with an air blast at 50°C for 6 hours and then stored in a desiccator for drying. The polished resin molded article and the aluminum alloy piece were stored in the respective desiccators for drying for 1 week.

One aluminum alloy piece was taken out from the desiccator to measure the surface roughness thereof. Subsequently, the surface condition was analyzed by SEM and XPS. Regarding the surface roughness, 13 µm was observed for a length of 2 mm. The SEM observation revealed that the aluminum alloy surface was closely crowded with irregularities regarded as pores and recesses or projections having a diameter of 0.05 to 0.1 µm. That is, the observed aluminum alloy surface was the same as an anodized aluminum surface before sealing. In the XPS observation, no zero-valent aluminum element was detected even when the aluminum alloy was observed at a deepened angle. The detected aluminum was + trivalent aluminum.

There was no metallic aluminum within the XPS reachable range. Thus, the experimental result agreed with the conventional knowledge. This process may be summarized in comparison to Experimental Example 1 as follows: ① the surface roughness is similarly large; ② the surface area is not remarkably large, but the pores are fine and deep, with an inner diameter of 0.05 µm; and ③ the thickness of the oxide film is several µm. The thickness of the thinnest film portion (pore bottom) could not be measured and hence unknown.

The remaining aluminum alloy pieces were taken out from the desiccator and bonded to resin molded articles, respectively, with an adhesive to form integrated articles in the same way as in Experimental Example 3. After a while, tensile testing was performed on the integrated articles. Ten integrated articles were tested. The average of 10 measured values of the shear breaking strength of the bonded surface was 90 kgf per square centimeter. This was equal to or slightly lower than the value in Experimental Example 3. The present inventors considered that because the recesses or projections on the aluminum alloy surface were excessively fine, the adhesive could not enter such fine recesses. Therefore, the shear breaking strength weakened undesirably despite the enlarged surface area.

### [Experimental Example 4]

The aluminum alloy pieces in Experimental Example 1 were transferred to a desiccator for drying. Meanwhile, 5 g of PBT pellets "Tufpet N1000 (available from Mitsubishi Rayon Co., Ltd.) was put into a beaker and dissolved in 200 g of orthochlorophenol added thereto under stirring with a stirrer and a magnetic stirrer. The beaker was put into a large-sized desiccator filled with nitrogen. Further, 5 aluminum alloy pieces were dipped in the solution in the beaker by being stood against the wall of the beaker in such a manner as not to overlap each other.

The pressure in the desiccator was reduced to 500 mmHg and kept at this level for 1 minute. Then, nitrogen was introduced into the desiccator to return the pressure therein to the ordinary pressure (760 mmHg). After 1 minute, the pressure in the desiccator was reduced again. This pressure reducing process was repeated 10 times. Thereafter, the pressure in the desiccator was returned to the ordinary pressure. After 1 hour, the desiccator was opened, and the aluminum alloy pieces were taken out from it while draining off the liquid, and then dried for 2 hours. Subsequently, the aluminum alloy pieces were placed in an air blast dryer at 50°C for 48 hours. Then, the aluminum alloy pieces were transferred to a desiccator and placed under a reduced pressure of 10 mmHg for 1 hour. Thereafter, the aluminum alloy pieces were placed under a reduced pressure of 1 mmHg for 1 hour and then under a reduced pressure of 0.01 mmHg for 24 hours, thereby allowing the solvent to evaporate.

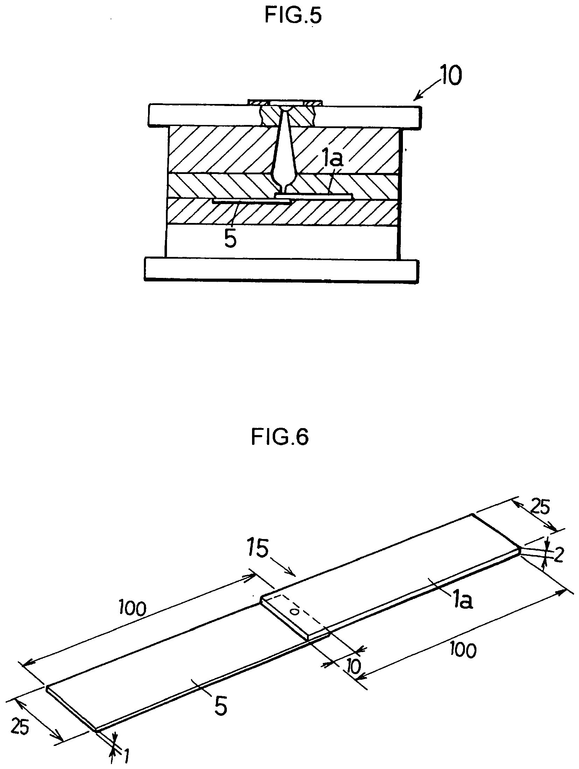

An aluminum alloy piece 5 coated with a thin PBT film thus obtained was inserted into an insert mold 10 as shown in Fig. 5, which had been heated to 110°C, and the thermoplastic resin composition obtained in Experimental Example 2 was injected into the mold 10 at an injection temperature of 280°C. After 40 seconds, the mold was opened. Thus, an integrated molded article was obtained. After two days, the tensile shear breaking strength of the integrated molded article was measured with a tensile testing machine. Five integrated molded articles were tested. The average of 5 measured values of the shear breaking strength of the bonded surface was 3.0 MPa (31 kgf per square centimeter).

### [Experimental Example 5]

On the aluminum alloy piece in Experimental Example 1, a two-part urethane curing type ink "VIC White (available from Seiko Advance Ltd.)" was printed by using a 270-mesh screen printing plate and baked at 100°C for 1 hour in a hot-air dryer. Then, the aluminum alloy piece was inserted into the insert mold 10 shown in Fig. 5, which had been heated to 100°C, and the thermoplastic resin composition obtained in Experimental Example 2 was injected into the mold 10 at an injection temperature of 280°C. After 40 seconds, the insert mold 10 was opened. Thus, an integrated molded article 15 as shown in Fig. 6 was obtained. After 2 days, the tensile shear breaking strength of the integrated molded article 15 was measured with a tensile testing machine. Ten integrated molded articles were tested. The average of 10 measured values of the shear breaking strength of the bonded surface was 12 kgf per square centimeter.

### [Experimental Example 6]

An aluminum alloy plate A5052/H38 with a thickness of 1 mm was cut into a rectangular piece of 100 mm by 25 mm. Further, a groove having a width of 0.5 mm and a depth of 0.7 mm was cut longitudinally in the center of the aluminum alloy piece with a length of 5 mm left uncut at an end thereof. Ten aluminum alloy pieces prepared in this way were treated in the same way as in Experimental Example 1. The treated aluminum alloy pieces were transferred to a desiccator for drying and allowed to stand for 1 week.

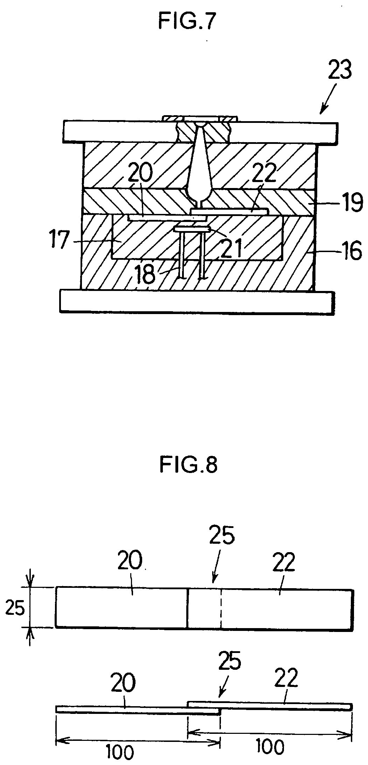

Meanwhile, an insert injection mold 23 as shown in Fig. 7 was made. In Fig. 7, a movable retainer plate 16 has a part (shaded part) made of a Bakelite material 17. The movable retainer plate 16 is provided with electrodes 18 for supplying electric power for heating, a through-opening (not shown) for suction-holding an insert material, a groove (not shown) for fitting a thermocouple, etc. A resin is injected into a stationary retainer plate 19. The injection mold 23 was heated to 110°C in advance.

One aluminum alloy piece 20 was taken out from the desiccator, and a superfine thermocouple (not shown) available from Sukegawa Electric Co., Ltd. was fitted into the groove thereof and locally fixed with a small amount of epoxy adhesive. The thermocouple is an alumel-chromel thermocouple inserted into a protecting tube of SUS having an outer diameter of 0.5 mm. In addition, a surface of the aluminum alloy piece 20 that was to be brought into contact with the electrodes 18 of the injection mold 23 was polished with sandpaper to facilitate the passage of electric current. The aluminum alloy piece 20 with the thermocouple was inserted into the movable retainer plate 16 and secured by using a vacuum. Then, the injection mold 23 was closed (as shown in the sectional view of Fig. 7).

The aluminum alloy piece 20 was supplied with an electric current while the temperature was being checked with a thermometer connected to the thermocouple (alternatively, the aluminum alloy piece 20 may be heated by heating a heating wire 21 disposed as shown in Fig. 7). When the aluminum alloy piece 20 was going to exceed 200°C, the heating power supply was cut off. At the same time, the thermoplastic resin composition 22 obtained in Experimental Example 2 was injected. 120 seconds after the injection, the injection mold 15 was opened, and a molded article 25 as shown in Fig. 8 was removed from the mold 15. The adhesive was removed with a knife to detach the thermocouple from the molded article. Thereafter, the molded article was handled in the same way as in Experimental Example 5. Finally, the tensile shear breaking strength of the molded article was measured. Ten molded articles were tested. The average of 10 measured values of the shear breaking strength of the bonded surface was 2.3 MPa (23 kgf per square centimeter).

### [Experimental Example 7]

An aluminum alloy plate A5052/H38 with a thickness of 1 mm was cut into a rectangular piece of 100 mm by 25 mm. The aluminum alloy piece was dipped in 1 liter of ethanol for 10 minutes under application of ultrasonic waves, and then dipped in 4 liters of tap water under stirring. Thereafter, the aluminum alloy piece was put into a plastic basket and washed with running tap water. Next, the aluminum alloy piece was dipped in a 2% aqueous caustic soda solution for 2 minutes, followed by rinsing with ion-exchange water. Then, the aluminum alloy piece was dipped in a 1% aqueous hydrochloric acid solution for 1 minute to effect neutralization. Then, the aluminum alloy piece was dip-washed in 4 liters of ion-exchange water, followed by rinsing with running ion-exchange water.

One liter of a 5% aqueous hydrazine monohydrate solution was prepared and heated to 50°C. The pH of the aqueous solution was 11.2. The foregoing aluminum alloy piece was dipped in the aqueous solution for 2 minutes and then thoroughly washed with ion-exchange water. The aluminum alloy piece was dried with hot air at 60°C for 20 minutes and then stored in dry air.

The same mold as in Experimental Example 4 was used. With the mold temperature kept at 100°C, the above-described aluminum alloy piece was inserted into the mold, and the thermoplastic resin composition shown in Experimental Example 2 was injected into the mold at an injection temperature of 280°C. After 40 seconds, the mold was opened to obtain a molded article. After 2 days, the tensile shear breaking strength of the molded article was measured. It exhibited a very high value, i.e. 10.8 MPa (110 kgf per square centimeter).

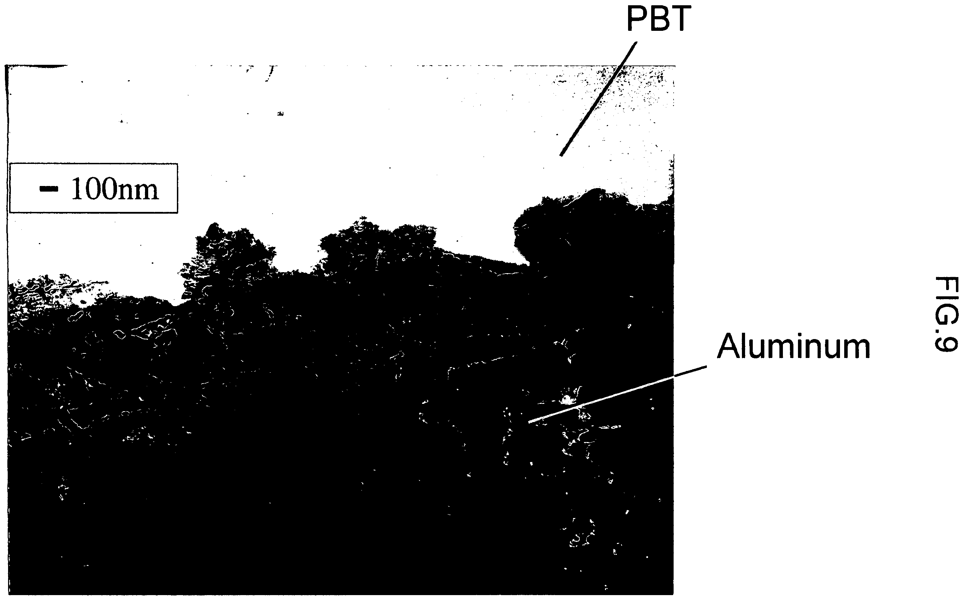

The integrated article thus obtained was cut and polished to prepare a sample that enabled a section of the bonded portion to be observed with an SEM. An SEM photograph of the section of the bonded portion is shown in Fig. 9. It will be understood from the photograph that the PBT resin entered every corner of the recesses of the aluminum alloy. The photograph of Fig. 9 shows that large pores having a diameter of about 0.3 to 0.8 µm are formed, and small pores are formed in the bottom or side surfaces of the large pores in the shape of inlets. The PBT is fixed in such a manner as to fill the large and small pores.

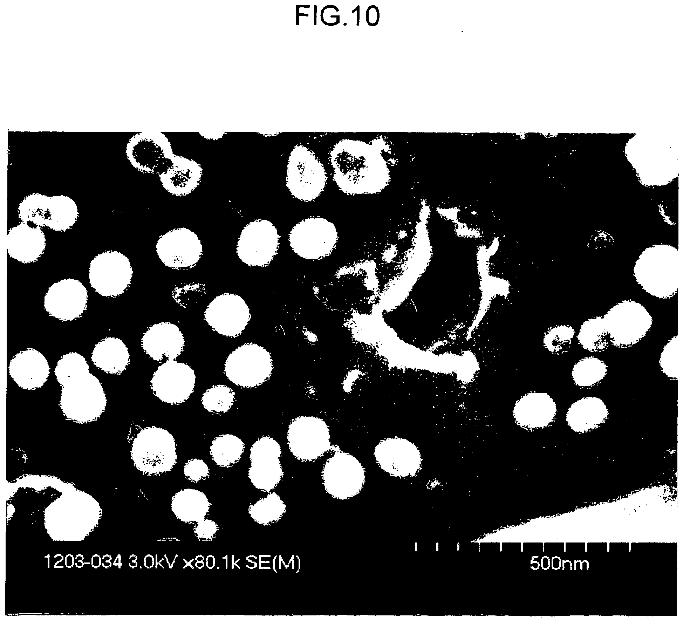

By way of precaution, an aluminum alloy piece that had been subjected to the shear breaking strength test and that had dots of resin attached to the surface thereof was put in 5 liters of a 5% aqueous hydrochloric acid solution and allowed to stand for 1 week. As a result, the aluminum alloy piece was dissolved. The solution was filtered, and the residue was rinsed with water and dried. Then, it was observed with an SEM. An SEM photograph thereof is shown in Fig. 10. The PBT in the recesses were released and semi-dissolved in the shape of spheres by the acid. The diameter of the spheres was from 0.02 to 0.1 µm. The size of the spheres was closely coincident with the size of the recesses formed on the aluminum alloy surface.

### [Experimental Example 8]

The integrated article obtained in Experimental Example 7 was subjected to colored aluminum anodizing treatment. That is, the integrated article was dipped in a 20% aqueous solution of a commercially available aluminum degreasing agent for 10 minutes, followed by rinsing with water. Subsequently, the integrated article was dipped in a 20% aqueous caustic soda solution at 60°C for 40 seconds, followed by rinsing with water. Then, the integrated article was dipped in a mixed acid liquid of sulfuric acid and phosphoric acid at 80°C for 2 minutes, followed by rinsing with water. Subsequently, an electrode was bonded to an end of the aluminum alloy, and anodizing was performed for 20 minutes under application of a voltage of 15 v in a 40% aqueous sulfuric acid solution kept at 20°C, followed by rinsing with running ion-exchange water. Further, the integrated article was dipped for 3 minutes in water having a dye dissolved therein and kept at 90°C to effect dyeing, followed by rinsing with water. Then, the integrated article was dipped in a 30% aqueous phosphoric acid solution at 100°C for 5 minutes to effect sealing, followed by rinsing with water. Then, the integrated article was dried with hot air at 70°C for 1 hour.

In this experiment, the aluminum anodizing treatment was performed at a slightly reduced temperature in comparison to the ordinary aluminum anodizing treatment to minimize the damage to the resin, and the dipping time was made longer than in the ordinary aluminum anodizing treatment in compensation for the reduction in temperature. This seemed to be a successful procedure. That is, the aluminum alloy surface was the same as the ordinary colored anodized aluminum surface. After the aluminum anodizing treatment, the tensile shear breaking strength of the integrated article was measured. Three integrated articles were tested. The average of 3 measured values of the shear breaking strength of the bonded surface was 9.0 MPa (92 kgf per square centimeter). Therefore, we judged that the colored aluminum anodizing treatment did not cause much damage to the bonded surface or the resin.

This experiment reveals that aluminum anodizing treatment can be performed even after the integrated article has been formed by carrying out the present invention, and it is possible to ensure the same weather resistance as obtained with the conventional procedure for any molded article wherein an aluminum material constitutes the surface layer.

### [Experimental Example 9]

An experiment was performed on 10 aluminum alloy pieces obtained in Experimental Example 1 (samples obtained by a caustic treatment process seeming as if it were finely adjusted eventually), 10 aluminum alloy pieces obtained by Reference Example 1 (samples obtained by a simple caustic treatment process), and 10 aluminum alloy pieces obtained by Reference Example 2 (samples obtained by a treatment process using anodizing and regarded as providing fine pores and the largest surface area). These aluminum alloy pieces were laid side-by-side in a dark room with an open window, that is, in a place where neither light nor rain could enter, but communication with the outside air was available. The aluminum alloy pieces were allowed to stand in the dark room.

At the beginning, the aluminum alloy pieces were dried in a desiccator for 2 days. Then, the weight of each aluminum alloy piece was measured. After 1 year, each aluminum alloy piece was dried in a desiccator for 2 days, and the weight thereof was measured again. All the three different groups of aluminum alloy pieces weighed around 6.7 g at the beginning and had a similar weight increase of 0.003 g. We considered that the aluminum alloy surface obtained in Experimental Example 1 would not be used as an exterior surface as it was.

We considered that when used as an exterior surface, the aluminum alloy surface would be anodized as in Experimental Example 8, or the aluminum alloy surface obtained in Experimental Example 1 would be painted. Further, we considered that when used as an interior surface, the aluminum alloy surface would not be painted. This experiment assumes a case where the aluminum alloy surface is not painted. Therefore, we carried out the experiment on the assumption that the aluminum alloy surface would be exposed to air, considered to be the same as the outside air, but not exposed to sunshine nor water. Measurements made in the middle of the experiment, i.e. when 1 year had elapsed, revealed that the measurement results were not different from those of the anodized aluminum products.

### Industrial Applicability:

The present invention is industrially applicable in the fields of various electronic devices for mobile applications, home electrical products, medical devices, automotive bodies, vehicle-mounted products, construction material parts, structural parts of various other machines, various parts for interior and exterior applications, and so forth.

## Claims

1. An aluminum alloy-and-resin composition composite comprising:
a shaped aluminum alloy material having a surface comprising fine recesses or projections, and
a thermoplastic resin composition fixed to the surface of said shaped aluminium alloy material by entering said recesses or engaging said projections,
**characterised in that** the surface of the shaped aluminium alloy material has a surface roughness defined by measurement on the photograph of surface of 1 µm to 10 µm and having fine recesses or projections of 0.01 µm to 0.1 µm in diameter on said surface, said surface being covered with a + trivalent aluminum compound having an average thickness of 0.001 µm; and
said thermoplastic resin composition contains as a main component a polybutylene terephthalate resin or polyphenylene sulfide and as a further component component a fibrous filler, the thermoplastic resin composition having an average coefficient of lengthwise and crosswise linear expansion, defined as an arithmetic averaged value of the direction where fibers of the resin composition mainly lie side-by-side and for the direction perpendicular to the same, of 2 to 4 x 10⁻⁵°C⁻¹.

2. An aluminum alloy-and-resin composition composite according to claim 1, wherein said recesses or projections include first recesses or first projections having a first diameter of 0.03 µm to 0.1 µm and a depth about equal to or larger than said first diameter, wherein the number of first recesses or first projections per 1 µm square area of said surface is not less than 10, and said recesses or projections further include second recesses or second projections having a second diameter of 0.01 µm to 0.03 µm and a depth about equal to or larger than said second diameter, wherein the number of second recesses or second projections per 1 µm square area of said surface is not less than 50.

3. An aluminum alloy-and-resin composition composite according to any one of claims 1 or 2, wherein said thermoplastic resin composition is fixed to the surface of said shaped aluminum alloy material by inserting said shaped aluminum alloy material into an injection mold and injecting said thermoplastic resin composition into said injection mold.

4. A production method for the aluminum alloy-and-resin composition composite according to any one of claims 1 or 2, said production method comprising the steps of:
preparing a shaped aluminium alloy material;
dipping said shaped aluminum alloy material in an aqueous solution of at least one selected from the group consisting of hydrazine, ammonia, and an amine compound;
inserting said dipped shaped aluminum alloy material into an injection mold; and
injecting said resin composition containing as a main component a polybutylene terephthalate resin or polyphenylene sulfide and as a further component component a fibrous filler.

5. A production method for the aluminium alloy-and-resin composition composite according to claim 4, said production method comprising:
coating said shaped aluminium alloy material with a thin film of polybutylene terephthalate or polyphenylene sulfide adhering to a surface thereof, using an organic solution of a polybutylene terephthalate or polyphenylene sulfide.

6. A production method according to claim 4 for the aluminium alloy-and-resin composition composite according to any one of claims 1 or 2, said production method comprising the steps of:
preparing a shaped aluminium alloy material;
heating said shaped aluminium alloy material to not lower than 200°C; and melting polybutylene terephthalate resin or polyphenylene sulfide and bringing it into contact with said shaped aluminium alloy material under pressure.

## Patentansprüche

1. Verbundartikel aus Aluminiumlegierung und Harzzusammensetzung, umfassend:
- ein geformtes Aluminiumlegierungsmaterial mit einer Oberfläche, die feine Ausnehmungen oder Vorsprünge aufweist, und
- eine thermoplastische Harzzusammensetzung, die an der Oberfläche des geformten Aluminiumlegierungsmaterials durch Eindringen in die Ausnehmungen oder Angriff an den Vorsprüngen befestigt ist,
**dadurch gekennzeichnet, dass** die Oberfläche des geformten Aluminiumlegierungsmaterials eine Oberflächenrauheit aufweist, definiert durch Messung auf der Photographie der Oberfläche, von 1µm bis 10 µm, mit feinen Ausnehmungen oder Vorsprüngen von 0,01 µm bis 0,1 µm im Durchmesser auf der Oberfläche, welche Oberfläche bedeckt ist mit einer +trivalenten Aluminiumverbindung mit einer durchschnittlichen Dicke von 0,001 µm; und
die thermoplastische Harzzusammensetzung als eine Hauptkomponente PolybutylenTerephthalat-Harz oder Polyphenylen-Sulfit enthält, und als eine weitere Komponente einen faserförmigen Füllstoff, welche thermoplastische Harzzusammensetzung einen durchschnittlichen Koeffizienten der linearen Längs- und Querausdehnung aufweist, definiert als ein arithmetischer Mittelwert der Richtung, in welcher die Fasern der Harzzusammensetzung hauptsächlich nebeneinanderliegen, und der dazu senkrechten Richtung, von 2 bis 4 x 10⁻⁵ Grad C⁻¹.

2. Verbundartikel aus Aluminiumlegierung und einer Harzzusammensetzung gemäß Anspruch 1, bei welcher die Ausnehmung oder Vorsprünge erste Ausnehmungen oder Vorsprünge umfassen, mit einem ersten Durchmesser von 0,03 µm bis 0,1 µm, und einer Tiefe etwa gleich oder größer als der erste Durchmesser, wobei die Anzahl der ersten Ausnehmungen oder Vorsprünge pro 1 µm Quadratfläche der Oberfläche nicht kleiner ist als 10, und die Ausnehmungen oder Vorsprünge ferner zweite Ausnehmungen oder Vorsprünge mit einem zweiten Durchmesser von 0,01 µm bis 0,03 µm und einer Tiefe von etwa gleich oder größer als der zweite Durchmesser aufweisen, wobei die Anzahl zweiter Ausnehmungen oder zweiter Vorsprünge pro 1 µm Quadratfläche der Oberfläche nicht kleiner ist als 50.

3. Verbundartikel aus Aluminiumlegierung und Harzzusammensetzung gemäß einem der Ansprüche 1 oder 2, bei welchem die thermoplastische Harzzusammensetzung an der Oberfläche des geformten Aluminiumlegierungsmaterials befestigt ist durch Einsetzen des geformten Aluminiumlegierungsmaterials in eine Spritzform und Einspritzen der thermoplastischen Harzzusammensetzung in die Spritzform.

4. Herstellungsverfahren für den Verbundartikel aus Aluminiumlegierung und Harzzusammensetzung gemäß einem der Ansprüche 1 oder 2, welches Herstellungsverfahren den folgenden Schritt umfasst:
Vorbereitung eines geformten Aluminiumlegierungsmaterials;
Eintauchen des geformten Aluminiumlegierungsmaterials in eine wässrige Lösung aus zumindest einem aus der Gruppe, bestehend aus Hydracin, Ammoniak, und einer Aminverbindung;
Einsetzen des eingetauchten geformten Aluminiumlegierungsmaterials in eine Spritzform; und
Einspritzen der Harzzusammensetzung, welche als Hauptkomponente ein Polybutylen-Terephtalat-Harz oder Polyphenylen-Sulfit enthält und als eine weitere Komponente einen faserförmigen Füllstoff, in die Spritzform.

5. Herstellungsverfahren für den Verbundartikel aus Aluminiumlegierung und Harzzusammensetzung gemäß Anspruch 4, welches Herstellungsverfahren umfasst:
Beschichten des geformten Aluminiumlegierungsmaterials mit einer dünnen Schicht aus Polybutylen-Terephtalat oder Polyphenylen-Sulfit, welches an einer Oberfläche desselben anhaftet, unter Verwendung einer organischen Lösung aus Polybutylen-Terephtalat oder Polyphenylen-Sulfit.

6. Herstellungsverfahren gemäß Anspruch 4, für den Verbundartikel aus Aluminiumlegierung und Harzzusammensetzung gemäß einem der Ansprüche 1 oder 2, welches Herstellungsverfahren den folgenden Schritt beinhaltet:
Vorbereiten eines geformten Aluminiumlegierungsmaterials;
Erhitzen des geformten Aluminiumlegierungsmaterials auf nicht weniger als 200 Grad C; und
Schmelzen von Polybutylen-Terephtalat-Harz oder Polyphenylen-Sulfit und Bringen desselben in Berührung mit dem geformten Aluminiumlegierungsmaterial unter Druck.

## Revendications

1. Composite d'alliage d'aluminium et de composition de résine comprenant :
un matériau façonné d'alliage d'aluminium ayant une surface comprenant de fines dépressions ou saillies, et
une composition de résine thermoplastique fixée à la surface dudit matériau façonné d'alliage d'aluminium par pénétration dans lesdites dépressions ou liaison avec lesdites saillies,
**caractérisé en ce que** la surface du matériau façonné d'alliage d'aluminium a une rugosité de surface définie par mesure sur la photographie d'une surface de 1 *µ*m à 10 *µ*m et ayant de fines dépressions ou saillies de 0,01 *µ*m à 0,1 *µ*m de diamètre sur ladite surface, ladite surface étant recouverte d'un composé d'aluminium trivalent + ayant une épaisseur moyenne de 0,001 *µ*m ; et
ladite composition de résine thermoplastique contient en tant que composant principal une résine de téréphtalate de polybutylène ou du sulfure de polyphénylène et en tant que composant additionnel une charge fibreuse, la composition de résine thermoplastique ayant un coefficient moyen d'expansion linéaire longitudinale et transversale, défini comme étant une valeur pondérée arithmétique de la direction dans laquelle les fibres de la composition de résine se trouvent principalement côte à côte et pour la direction perpendiculaire à celle-ci, de 2 à 4 x 10⁻⁵ °C⁻¹.

2. Composite d'alliage d'aluminium et de composition de résine selon la revendication 1, dans lequel lesdites dépressions ou saillies incluent des premières dépressions ou des premières saillies ayant un premier diamètre de 0,03 *µ*m à 0,1 *µ*m et une profondeur environ supérieure ou égale audit premier diamètre, dans lequel le nombre de premières dépressions ou de premières saillies pour une aire de 1 *µ*m carré de ladite surface n'est pas inférieur à 10, et lesdites dépressions ou saillies incluent en outre des secondes dépressions ou des secondes saillies ayant un second diamètre de 0,01 *µ*m à 0,03 *µ*m et une profondeur environ supérieure ou égale audit second diamètre, dans lequel le nombre de secondes dépressions ou de secondes saillies pour une aire de 1 *µ*m carré de ladite surface n'est pas inférieur à 50.

3. Composite d'alliage d'aluminium et de composition de résine selon l'une quelconque des revendications 1 ou 2, dans lequel ladite composition de résine thermoplastique est fixée à la surface dudit matériau façonné d'alliage d'aluminium par insertion dudit matériau façonné d'alliage d'aluminium dans un moule d'injection et injection de ladite composition de résine thermoplastique dans ledit moule d'injection.

4. Procédé de production pour le composite d'alliage d'aluminium et de composition de résine selon l'une quelconque des revendications 1 ou 2, ledit procédé de production comprenant les étapes de :
préparation d'un matériau façonné d'alliage d'aluminium,
trempage dudit matériau façonné d'alliage d'aluminium dans une solution aqueuse d'au moins un choisi dans le groupe constitué de l'hydrazine, de l'ammoniaque et d'un composé aminé ;
insertion dudit matériau façonné d'alliage d'aluminium trempé dans un moule d'injection ; et
injection de ladite composition de résine contenant en tant que composant principal une résine de téréphtalate de polybutylène ou du sulfure de polyphénylène et en tant que composant additionnel une charge fibreuse dans ledit moule d'injection.

5. Procédé de production pour le composite d'alliage d'aluminium et de composition de résine selon la revendication 4, ledit procédé de production comprenant :
le revêtement dudit matériau façonné d'alliage d'aluminium avec un film mince de téréphtalate de polybutylène ou de sulfure de polyphénylène adhérant à une surface de celui-ci, en utilisant une solution organique d'un téréphtalate de polybutylène ou de sulfure de polyphénylène.

6. Procédé de production selon la revendication 4 pour le composite d'alliage d'aluminium et de composition de résine selon l'une quelconque des revendications 1 ou 2, ledit procédé de production comprenant les étapes de :
préparation d'un matériau façonné d'alliage d'aluminium ;
chauffage dudit matériau façonné d'alliage d'aluminium à une température non inférieure à 200 °C ; et fusion de la résine de téréphtalate de polybutylène ou du sulfure de polyphénylène et mise en contact de celle-ci (celui-ci) avec ledit matériau façonné d'alliage d'aluminium sous pression.
